# EUROPÄISCHE PATENTSCHRIFT

(11) **EP 1 033 221 B1**
(45) Veröffentlichungstag und Bekanntmachung des Hinweises auf die Patenterteilung: **20.08.2003**
(21) Anmeldenummer: 00103505.4
(22) Anmeldetag: 18.02.2000
(51) Int. Cl.: B29C 33/44, B29C 45/44, B29L 22/00, B29C 45/40, B29C 33/48

(54) **Verfahren zur spanlosen Herstellung eines Ventilgehäuses**
Method for producing a valve housing without cutting
Procédé de fabrication d'un logement de soupape sans enlèvement de copeaux

(30) Priorität: 03.03.1999 DE 19909288
(43) Veröffentlichungstag der Anmeldung: 06.09.2000
(73) Patentinhaber: ROBERT BOSCH GMBH, 70442 Stuttgart (DE)
(72) Erfinder: Widera, Joerg, 70839 Gerlingen (DE); Jungeilges, Rainer, 74232 Abstatt (DE)
(74) Vertreter: Maiwald Patentanwalts GmbH

(56) Entgegenhaltungen:
- EP-A- 0 909 912
- EP-A- 0 924 451
- DE-A- 19 729 828
- DE-U- 9 218 270
- FR-A- 1 015 307
- PATENT ABSTRACTS OF JAPAN vol. 013, no. 311 (M-851), 17. Juli 1989 (1989-07-17) -& JP 01 099814 A (TOMIHO:KK), 18. April 1989 (1989-04-18)

## Beschreibung

### Stand der Technik

Die Erfindung geht aus von einem Verfahren zur spanlosen Herstellung eines Ventilgehäuses entsprechend der Gattung des Anspruchs 1.

Ein derartiges Verfahren ist auch der DE-A-197 29 828 bekannt. Bei diesem Verfahren wird zumindest ein Teil des Gehäuseinneren eines Ventilgehäuses mit Hilfe eines Schmelzkerns hergestellt. Dieser Schmelzkern wird von einem Werkzeugstempel in der Spritzgussform gehalten und wird am Verfahrensende ausgeschmolzen. Das Ausschmelzen ist kostenintensiv und kann infolge von Wärmespannungen im Ventilgehäuse zu Verzug führen.

Aus der DE-U-9 218 270 geht ein Verfahren zur Herstellung eines Ventilgehäuses hervor, bei dem ein schlauchartiges, weiches, elastisches Einlegeteil verwendet wird. Das Einlegeteil dient der Ausformung der gesamten Schieberbohrung. Quer hierzu verlaufende Druckmittelkanäle, welche zur Verbindung der Schieberbohrung mit äußeren Anschlüssen erforderlich sind, sind jedoch in einem weiteren Fertigungsschritt herzustellen. Somit kann durch dieses Einlegeteil nicht die gesamte ventilinterne Kanalführung des Ventilgehäuses ausgebildet werden. Weiterhin erscheint die Entformung des schlauchartigen Einlegeteils vom Ventilgehäuse nach dessen Herstellung als recht arbeitsintensiv, weil hierbei die Anhaftung des schlauchartigen Einlegeteils am abgekühlten Ventilgehäuse überwunden werden muss.

Es ist daher die Aufgabe der vorliegenden Erfindung, ein effektives Verfahren zur Herstellung eines Ventilgehäuses mit Hinterschneidungen ohne thermische oder spanende Nachbearbeitung zu schaffen.

### Vorteile der Erfindung

Die Erfindung mit den kennzeichnenden Merkmalen des Anspruchs 1 weist demgegenüber den Vorteil auf, dass mit Hilfe von wieder verwendbaren Einlegeteilen auf den Einsatz von Schmelzkernen verzichtet werden kann. Die Einlegeteile sind maßlich mit den Dimensionen des zentrisch angeordneten Stempels derart abgestimmt, dass ein einfaches Entfernen über die durch den zentrischen Stempel gebildete Ausnehmung möglich ist. Die so entfernten Einlegeteile können beim nächsten Spritzvorgang wieder verwendet werden. Das erfindungsgemäße Verfahren bildet die Grundlage zur Herstellung von Ventilgehäusen in Kunststoff ohne thermische Nachbehandlung. Die Ausbildung von Steuerkanten und Dichtflächen ist dabei ohne mechanische Bearbeitung möglich. Die für das erfindungsgemäße Verfahren eingesetzten Werkzeuge haben ein hohes Stückzahlpotential bei geringem Investitionsaufwand. Dies senkt die Fertigungskosten, insbesondere im Vergleich zur bekannten voll- bzw. teilmechanischen Herstellung. Die auf diese Weise hergestellten Ventilgehäuse zeichnen durch einen hohen Durchfluß und ihre kompakte Bauweise aus, sind korrosionsfest und haben ein geringes Gewicht. Aufgrund der geringen Anzahl von Dichtstellen haben diese Ventilgehäuse eine verhältnismäßig hohe Dichtheit gegen Druckmittelleckage. Wegeventile mit derartig hergestellten Gehäusen bestehen aus wenigen Einzelteilen und lassen sich einfach montieren.

Weitere Vorteile oder vorteilhafte Weiterbildungen der Erfindung ergeben sich aus den Unteransprüchen oder der Beschreibung.

### Zeichnung

Die Erfindung ist anhand der Zeichnung dargestellt und wird im Folgenden näher erläutert.

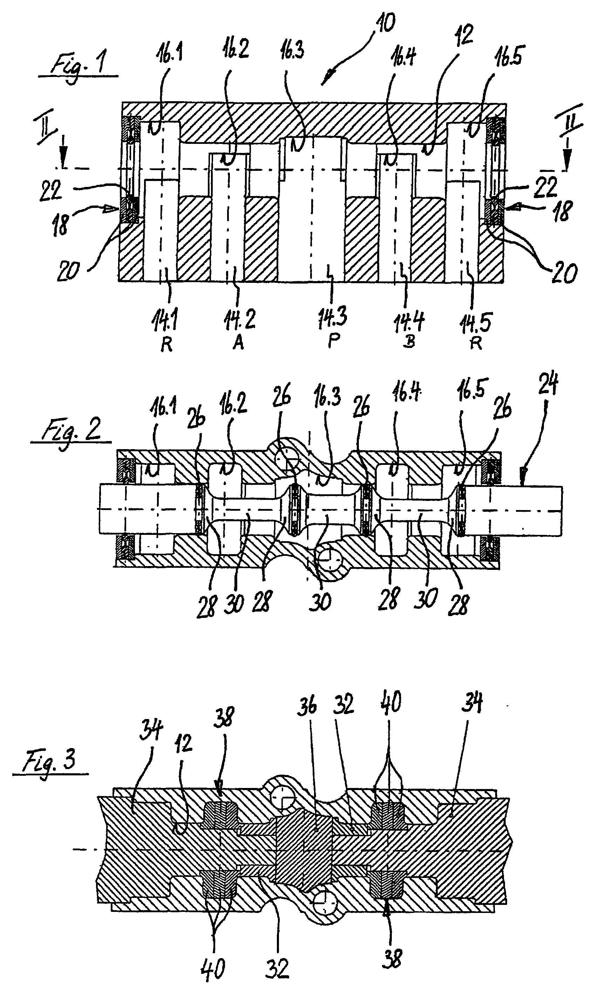

Ein gemäß dem beanspruchten Verfahren hergestelltes Ventilgehäuse ist in Figur 1 im Längsschnitt gezeichnet. Einen Querschnitt durch ein Ventilgehäuse entlang der Linie II-II nach Figur 1 zeigt die Figur 2, wobei hier in das Ventilgehäuse ein Steuerschieber eingebaut ist. Der Aufbau eines Werkzeugs zur Herstellung des Ventilgehäuses gemäß den Figuren 1 oder 2 ist in der Figur 3 teilweise dargestellt.

### Beschreibung der Erfindung

Figur 1 zeigt exemplarisch das Gehäuse 10 eines pneumatischen 5/2-Wegeventils. Dieses Gehäuse 10 ist mit einer entlang seiner Längsachse verlaufenden Schieberbohrung 12 versehen, die das Gehäuse 10 vollständig durchdringt.

Darüber hinaus weist das Gehäuse 10 Druckmittelkanäle 14.1 bis 14.5 auf, die sacklochartig in die Schieberbohrung 12 einmünden und zu einer Außenseite des Gehäuses 10 hin verlaufen. Dort enden die Druckmittelkanäle 14.1 bis 14.5 in nicht dargestellten Anschlüssen zur Kontaktierung mit druckmittelführenden Leitungen.

Die Druckmittelkanäle 14.1 bis 14.5, die entgegen der Darstellung nach Figur 1 auch zu verschiedenen Außenseiten des Gehäuses hin verlaufen können, sind mit Abstand nebeneinander angeordnet und enden jeweils in einer Arbeitskammer 16.1 bis 16.5. Letztere sind, wie Figur 2 deutlich zeigt, in ihren Abmessungen gegenüber der Schieberbohrung 12 erweitert. In den beiden stirnseitigen Endabschnitten der Schieberbohrung 12 sind Dichtungseinrichtungen 18 aus zwei Stützscheiben 20 und einem dazwischen liegenden Dichtring 22 angeordnet.

Diese Dichtungseinrichtungen 18 wirken, wie in Figur 2 gezeigt ist, mit einem Ventilschieber 24 zusammen. Dieser ist axial verschiebbar in der Schieberbohrung 12 geführt und weist Dichtungen 26 tragende Zylinderabschnitte 28 und dazwischen liegende und in ihrem Außendurchmesser gegenüber den Zylinderabschnitten 28 zurückgenommene Verbindungsabschnitte 30 auf. Die Zylinderabschnitte 28 trennen in der nicht dargestellten Grundstellung des Wegeventils in Wirkverbindung mit den Dichtungen 26 und der Wandung der Schieberbohrung 12 jeweils zwei benachbarte Arbeitskammern 16 voneinander. Wird der Ventilschieber 24, gemäß Figur 2, axial ausgelenkt, so werden Druckmittelverbindungen zwischen zwei benachbarten Arbeitskammern 16, in Figur 2 beispielhaft zwischen den Arbeitskammern 16.2 und 16.3 sowie den Arbeitskammern 16.4 und 16.5 geöffnet, indem wenigstens einer der Zylinderabschnitte 28 außer Eingriff mit der Wandung der Schieberbohrung 12 gebracht wird. Der Einfachheit halber sind die Enden des Ventilschiebers 24 als nach außen ragende Zylinder dargestellt. Über sie erfolgt eine Betätigung des Ventilschiebers zur Umschaltung der Druckmittelverbindungen zwischen den Arbeitskammern 16. Diese Betätigung kann mechanisch, elektromagnetisch oder druckmittelgesteuert erfolgen.

Eine der maßgeblichen Kenngrößen eines Wegeventils ist dessen maximaler Druckmitteldurchsatz. Dieser läßt sich durch eine strömungstechnisch günstige Formgebung der Wandung der Arbeitskammern 16 verbessern. Im dargestellten Gehäuse nach Figur 1 weist deshalb die dem Zulauf zugeordnete mittlere Arbeitskammer 16.3 einen Freiformquerschnitt mit besonders stark abgerundeten Steuerkanten am Übergang zur Schieberbohrung 12 auf. Seitlich zu dieser zulaufseitigen Arbeitskammer 16.3 sind die beiden den Verbrauchern A und B zugeordneten Arbeitskammern 16.2 und 16.4 plaziert; die dem Rücklauf R zugeordneten Arbeitskammern 16.1 und 16.5 liegen jeweils benachbart dazu im stirnseitigen Bereich des Ventilgehäuses 10.

Die Erfindung besteht in einem Verfahren zur Herstellung eines derart ausgebildeten Ventilgehäuses 10, ohne dazu verlorene Kerne oder eine spanende Nachbearbeitung an den Laufbereichen der Dichtungen 26 oder an den Steuerkanten zu erfordern. Das erfindungsgemäße Verfahren zeichnet sich durch die Verwendung von wiederverwendbaren Einlegeteilen 32 (Figur 3) aus, die mit Hilfe von Längs- bzw. Querschiebern während des Verfahrens im Werkzeug fixiert werden und im Anschluß daran aus dem Ventilgehäuse 10 ausgepreßt werden.

Wie Figur 3 zeigt, handelt es sich bei den Einlegeteilen 32 um hülsenförmige Bauelemente, die auf zwei Längsschiebern 34 des Werkzeugs zu Beginn des Verfahrens aufgeschoben werden. Die derart bestückten Längsschieber 34 formen den seitlichen Teil der Schieberbohrung 12 aus, sind koaxial zueinander im Werkzeug angeordnet, gegeneinander gerichtet und sind in ihrem Außendurchmesser mehrfach rechtwinklig abgestuft. Der kleinste Außendurchmesser ist am jeweils innenliegenden Ende eines Längsschiebers 34 ausgebildet und nimmt die Einlegeteile 32 auf. Deren Außenkontur ist unter strömungstechnischen Gesichtspunkten weitgehend frei wählbar, muß aber am Verfahrensende zur Entfernung der Einlegeteile 32 eine axiale Verschiebbarkeit in Richtung der mittleren Arbeitskammer 16.3 ermöglichen.

In der Schließstellung des Werkzeugs besteht zwischen den einander zugewandten Stirnflächen der beiden Längsschieber 34 ein Abstand, in den ein die Außenkontur der Arbeitskammer 16.3 formender, quer im Werkzeug geführter Stempel 36 eingeschoben wird. Der Stempel 36 ist dabei so bemessen, daß seine Ausdehnung sowohl in radialer als auch in axialer Richtung größer ist als die entsprechenden Abmessungen eines Einlegeteils 32.

An den Seitenflächen dieses Stempels 36 stützen sich die Längsschieber 34 und die Einlegeteile 32 ab.

Gleichzeitig mit den Stempel 36 wird in das Werkzeug ein Querschieber 38 eingeführt. Letzterer ist mehrteilig ausgeführt und weist zwei gabelförmig ausgebildete Enden 40 auf, die den Längsschieber 34 umgreifen. Der Querschieber 38 ist an dem vom Stempel 36 abgewandt liegenden Ende der Einlegeteile 32 angeordnet und spannt zur axialen Fixierung diese Einlegeteile 32 zwischen sich und den Stempel 36 ein.

Die Außenkontur der Einlegeteile 32 formt den Laufbereich der Dichtungen 26 des Ventilschiebers 24 im Bereich zwischen den Arbeitskammern 16.2 und 16.3 bzw. 16.3 und 16.4; der Laufbereich zwischen den Arbeitskammern 16.1 und 16.2 bzw. 16.4 und 16.5 wird vom entsprechenden Konturabschnitt der Längsschieber 34 bestimmt. Die Form der Arbeitskammern 16.1 und 16.5 geben ebenfalls die Längsschieber 34 vor, die der Arbeitskammern 16.2 und 16.4 dagegen die Querschieber 38 und die der Arbeitskammer 16.3 der Stempel 36.

Nach der Formgebung des Gehäuses 10 werden der Stempel 36 und der Querschieber 38 gezogen, danach folgen die Längsschieber 34. Die Einlegeteile 32 verbleiben dabei im Ventilgehäuse 10. Durch Ziehen des zentralen Stempels 36 ist ausreichend Raum im Gehäuse 10 vorhanden, um diese Einlegeteile 32 auszupressen. Dies erfolgt in einem separaten Verfahrensschritt, bei dem durch die Schieberbohrung 12 eine Auspreßvorrichtung ins Ventilgehäuse 10 eingeführt wird, die die Einlegeteile in Richtung der vom Stempel 36 geformten Arbeitskammer 16.3 drückt. Die so entfernten Einlegeteile 32 können beim nächsten Spritzvorgang wieder verwendet werden.

Durch die mehrteilige Ausführung der Querschieber 38 können die Strömungskanten am Übergang von den Arbeitskammern 16.2 und 16.4 in die Schieberbohrung 12 gerundet und damit der Durchfluß und die Montierbarkeit des Ventilschiebers 24 verbessert werden. Die Laufflächen der Dichtungen 26 des Ventilschiebers 24 und die Steuerkanten werden funktionsfertig, d.h. ohne mechanische Nachbearbeitung hergestellt. Ventilgehäuse 10 aus Vollkunststoff lassen sich dadurch kostengünstig, kompakt und einfach herstellen.

Selbstverständlich sind Änderungen oder Ergänzungen an den beschriebenen Gegenständen bzw. Verfahren möglich, ohne vom Grundgedanken der Erfindung abzuweichen. Diesbezüglich ist anzumerken, daß Ventilgehäuse 10 auf diese Weise nicht nur in Kunststoff, sondern auch in anderen Materialien, beispielsweise Legierungen aus Leichtmetall, herstellbar sind. Ebenso ist die Erfindung nicht auf die Herstellung von 5/2-Wegeventilen aus dem pneumatischen Anwendungsbereich eingeschränkt.

## Patentansprüche

1. Verfahren zur spanlosen Herstellung von Ventilgehäusen (10), insbesondere für schiebergesteuerte, pneumatische Wegeventile, mit einer der Führung eines Schiebers (24) dienenden Schieberbohrung (12), mit vom Schieber (24) gesteuerten Arbeitskammern (16) und mit in die Arbeitskammern (16) einmündenden Druckmittelkanälen (14), mit Hilfe eines mindestens einen Längsschieber (34), Querschieber (38) und Stempel (36) aufweisenden Formwerkzeugs,
**dadurch gekennzeichnet, dass** die Längsschieber (34) mit Einlegeteilen (32) bestückt werden, die während des Verfahrens von an ihren Stirnflächen anliegenden Querschiebern (38) und Stempeln (36) im Formwerkzeug axial fixiert werden, und dass die Einlegeteile (32) nach Abschluss des Verfahrens und nach dem Entfernen der Stempel (36) bzw. der Querschieber (38) ausgepresst und über die vom Stempel (36) gebildete Ausnehmung entfernt werden wobei ein zentrisch angeordneten Stempel (36) verwendet wird der in seiner radialen und axialen Ausdehnung jeweils größer ist, als die entsprechende Ausdehnung eines der Einlegeteile (32).

2. Verfahren nach Anspruch 1,
**dadurch gekennzeichnet, dass** ein mehrteilig ausgebildeter Querschieber (38) verwendet wird.

3. Verfahren nach Anspruch 1 oder 2,
**dadurch gekennzeichnet, dass** als Material für das Ventilgehäuse (10) Kunststoff verwendet wird.

4. Verfahren nach einem der Ansprüche 1 bis 3,
**dadurch gekennzeichnet, dass** als Einlegeteil (32) hülsenförmige Bauelemente verwendet werden, deren Außenkonturen die Durchströmung des Ventilgehäuses (10) mit Druckmittel verbessern.

5. Verfahren nach einem der vorstehenden Ansprüche,
**dadurch gekennzeichnet, dass** zur Herstellung eines Ventilgehäuses (10) für ein 5/2-Wegeventil ein Gusswerkzeug mit zwei zueinander koaxial angeordneten Längsschiebern (34) und einem zwischen diesen beiden Längsschiebern (34) liegenden Stempel (36) verwendet wird.

6. Verfahren nach einem der vorstehenden Ansprüche,
**dadurch gekennzeichnet, dass** die Querschieber (38) gabelförmig ausgebildete Enden (40) aufweisen, die die Längsschieber (34) seitlich umgreifen.

7. Verfahren nach einem der vorstehenden Ansprüche,
**dadurch gekennzeichnet, dass** von den Längsschiebern (34) und den Einlegeteilen (32) die Dichtflächen und die Steuerkanten für einen im Ventilgehäuse (10) geführten Ventilschieber (24) gebildet werden.

8. Verfahren nach einem der vorstehenden Ansprüche,
**dadurch gekennzeichnet, dass** von den Querschiebern (38) und dem Stempel (36) die Wandungen der Arbeitskammern (16) und der Druckmittelkanäle (14) gebildet werden.

## Claims

1. Method for the non-cutting production of valve housings (10), in particular for slide controlled, pneumatic directional control valves, with a slide bore (12) which serves to guide a slide (24), with working chambers (16) controlled by the slide (24) and with pressure means channels (14) which discharge into the working chambers (16), with the aid of a form tool with at least one of a longitudinal slide (34), a cross slide (38) and a plunger (36),
**characterized in that** the longitudinal slides (34) are provided with inserts (32), which, during the method are axially fixed by cross slides (38) and plungers (36) in the form tool adjacent to their face surfaces, and that, after conclusion of the method and after removal of the plungers (36), respectively the cross slides (38), the inserts (32) are ejected and removed via the recess formed by the plunger (36), wherein a plunger (36) is used which is centrically arranged, and which radial and axial dimensions are respectively bigger than the respective recess of one of the inserts (32).

2. Method according to claim 1,
**characterized in that** a multipart cross slide (38) is used.

3. Method according to claim 1 or 2,
**characterized in that** synthetic material is used for the valve housing (10).

4. Method according to one of claims 1 to 3,
**characterized in that** hollow elements are used as insert (32), the outer profiles of which improve the flow of the pressure means through the valve housing (10).

5. Method according to one of the above claims,
**characterized in that** for the production of a valve housing (10) for a 5/2 directional control valve, a casting tool with two coaxially positioned longitudinal slides (34) and a plunger (36) arranged between these two longitudinal slides is used.

6. Method according to one of the above claims,
**characterized in that** the cross slides (38) are provided with fork-like ends (40), which encompass the sides of the longitudinal slides (34).

7. Method according to one of the above claims,
**characterized in that** the sealing surfaces and the control edges for a valve slide (24) guided in the valve housing (10) are formed by the longitudinal slides (34) and the inserts (32).

8. Method according to one of the above claims,
**characterized in that** the walls of the working chambers (16) and the pressure means channels (14) are formed by the cross slides (38) and the plunger (36).

## Revendications

1. Procédé pour la fabrication sans enlèvement de copeaux d'une boîte à soupape (10), notamment pour des distributeurs pneumatiques pourvus d'une distribution par tiroir, avec un alésage pour coulisse (12) servant au guidage d'une coulisse (24), avec des compartiments de travail (16) asservis par la coulisse (24) et avec des canaux pour l'agent de pression (14) débouchant dans les compartiments de travail (16), en se servant d'un outil de formage comportant au moins une coulisse longitudinale (34), une coulisse transversale (38) et un poinçon (36),
**caractérisé en ce que** les coulisses longitudinales (34) sont équipées de pièces encastrées (32) qui sont fixées au cours du procédé de manière axiale dans l'outil de formage au moyen de coulisses transversales (38) et de poinçons (36) qui viennent coller uniformément contre les surfaces frontales de ceux-ci, **en ce qu'**à la fin du procédé et après l'enlèvement du poinçon (36) respectivement de la coulisse transversale (38) les pièces encastrées (32) sont exprimées et éloignées par les creux formés par le poinçon (36) et à ce qu'à cette fin on utilise un poinçon (36) qui est disposé centralement et qui dans son extension radiale et axiale respectivement est plus grand que l'extension correspondante de l'une des pièces encastrées (32).

2. Procédé suivant revendication 1, **caractérisé en ce que** l'on utilise une coulisse transversale (38) configurée en plusieurs pièces.

3. Procédé suivant revendication 1 ou 2, **caractérisé en ce que** comme matériau pour la boîte à soupape (10) on utilise une matière plastique.

4. Procédé suivant l'une des revendications 1 à 3, **caractérisé en ce que** comme pièce encastrée (32) on utilise des éléments de construction en forme de manchons dont les contours extérieurs améliorent le drainage de la boîte à soupape (10) avec l'agent de pression.

5. Procédé suivant l'une des revendications qui précèdent, **caractérisé en ce que** pour la fabrication d'une boîte à soupape (10) pour un distributeur à quatre voies on utilise un outil en fonte avec deux coulisses longitudinales (34) disposées coaxialement l'une par rapport à l'autre ainsi qu'avec un poinçon (36) disposé entre ces deux coulisses longitudinales (34).

6. Procédé suivant l'une des revendications qui précèdent, **caractérisé en ce que** les coulisses transversales (38) présentent des extrémités qui sont façonnées de manière fourchue et qui enveloppent latéralement les coulisses longitudinales (34).

7. Procédé suivant l'une des revendications qui précèdent, **caractérisé en ce que** les surfaces de contact et les chants de commande pour les coulisses longitudinales (34) et pour les pièces encastrées (32) sont façonnés pour une coulisse (24) guidée dans une boîtes à soupape (10).

8. Procédé suivant l'une des revendications qui précèdent, **caractérisé en ce que** les parois des compartiments de travail (16) et des canaux pour l'agent de pression (14) sont formées par les coulisses transversales (38) et le poinçon (36).
